# FASCICULE DE BREVET EUROPEEN

(11) **EP 0 644 164 B1**
(45) Date de publication et mention de la délivrance du brevet: **11.08.1999**
(21) Numéro de dépôt: 94402050.2
(22) Date de dépôt: 14.09.1994
(51) Int. Cl.: C03C 3/087, C03C 3/095, C03C 4/08

(54) **Compositions de verre destinées à la fabrication de vitrages**
Glaszusammensetzung zur Herstellung von Verglasungen
Glass compositions for the production of glass panes

(30) Priorité: 17.09.1993 FR 9311129
(43) Date de publication de la demande: 22.03.1995
(73) Titulaire: SAINT-GOBAIN VITRAGE, 92400 Courbevoie (FR)
(72) Inventeur: Jeanvoine, Pierre, F-78300 Poissy (FR); Lismonde, Michel, 2, Résidence de la Chancellerie, F-92400 Courbevoie (FR); Vieslet, Jacques, B-1341 Ceroux Mousty (BE)
(74) Mandataire: Breton, Jean-Claude

(56) Documents cités:
- EP-A- 0 469 446
- EP-A- 0 488 110
- EP-A- 0 598 305
- WO-A-91/07356
- US-A- 4 701 425
- US-A- 5 214 008

## Description

La présente invention concerne des compositions de verre aptes à la réalisation de vitrages susceptibles notamment d'être utilisés dans le domaine architectural ou montés sur des véhicules automobiles et industriels.

Les vitrages utilisés dans ce dernier type d'application doivent satisfaire des exigences légales relatives à leur transmission lumineuse. Ainsi, un vitrage destiné à la réalisation d'un pare-brise doit présenter un facteur de transmission lumineuse globale sous illuminant A (TL_{A}) au moins égal à 75 %. Les vitrages destinés à la réalisation des latéraux et de la lunette arrière doivent présenter, dans les mêmes conditions, un facteur TL_{A} au moins égal à 70 %.

La surface vitrée des véhicules automobiles étant actuellement très importante, les exigences de la clientèle en matière de confort devenant de plus en plus grandes, les constructeurs de ces véhicules recherchent tous les moyens qui permettent d'atténuer la sensation de chaleur éprouvée par les passagers soumis au rayonnement solaire.

Pour maintenir une transmission lumineuse élevée dans la partie visible du spectre tout en absorbant le plus possible le reste de l'énergie solaire, il est connu d'introduire du fer dans la composition du verre. Le fer est présent dans le verre à la fois sous la forme d'oxyde ferrique (Fe₂O₃) et d'oxyde ferreux (FeO).

La présence de Fe₂O₃ permet d'absorber les radiations U.V. et celles qui possèdent de courtes longueurs d'ondes dans la partie visible du spectre ; à l'opposé, la présence de FeO permet d'absorber les radiations du proche I.R. et celles correspondant aux grandes longueurs d'ondes du domaine visible.

Si l'augmentation de la teneur en fer, sous ses deux formes oxydées, accentue l'absorption des radiations aux deux extrémités du spectre visible, cet effet est obtenu au détriment de la transmission lumineuse.

A ce jour, différentes solutions ont été proposées pour utiliser au mieux l'aptitude des oxydes de fer à absorber les radiations en conservant néanmoins la plus grande transmission lumineuse possible.

Ainsi, le brevet EP-B-297 404 décrit et revendique des verres silico-sodo-calciques dont la teneur en fer total, exprimée sous la forme de Fe₂O₃ est comprise entre 0,45 et 0,65%. Ces verres sont élaborés dans des conditions telles qu'au moins 35% et de préférence au moins 50% de fer total est sous la forme de FeO. L'augmentation de la teneur en FeO ainsi obtenue permet d'accentuer l'absorption des verres dans l'infrarouge et de diminuer le facteur de transmission énergétique globale (T_{E}). Toutefois, lorsqu'un verre est élaboré en présence de soufre dans des conditions fortement réductrices, ce dernier prend une couleur ambre due à la formation de chromophores qui résultent de la réaction entre le soufre et le fer ferrique. Pour éviter cela il est donc nécessaire de supprimer les sulfates dans le mélange vitrifiable et, comme la teneur en soufre dans un verre n'est jamais nulle, de veiller à ce que le pourcentage de fer ferrique reste faible, ce qui conduit à limiter rigoureusement la teneur en fer total. Il s'ensuit que la capacité de ces verres à absorber les radiations U.V. est médiocre.

Il est également connu de fabriquer des verres qui, grâce à une teneur en fer total plus élevée que celle préconisée par le brevet européen mentionné ci-dessus, concilient une bonne transmission lumineuse et une bonne absorption des radiations infrarouges et ultraviolettes.

Ainsi, le brevet US-A-5 214 008 décrit des verres dénués d'oxyde cérique et autres oxydes de ce type, qui contiennent entre 0,7 et 0,95% en poids de fer total exprimé sous la forme Fe₂O₃. Ces verres sont élaborés dans des fours classiques, à partir de matières premières vitrifiables ordinaires. Le degré d'oxydo-réduction du verre est contrôlé grâce à l'introduction de carbone et de sulfate de sodium dans le mélange vitrifiable.

Ce degré d'oxydo-réduction varie dans des limites précises telles que le fer sous la forme FeO dans le verre varie de 0,19 à 0,24% en poids, ledit verre présentant sous une épaisseur comprise entre 3,7 et 4,8 millimètres un facteur de transmission lumineuse supérieur à 70%, un facteur de transmission dans l'ultraviolet inférieur à 38% et un facteur de transmission énergétique global inférieur à 44,5%.

D'autres compositions de verre silico-sodo-calcique permettent d'obtenir, sous une épaisseur déterminée, un facteur de transmission lumineuse au moins égal à 70% et une bonne absorption des radiations infrarouges et ultraviolettes. C'est notamment le cas de celles décrites dans les demandes de brevet EP-A-488 110 et WO-91/07356. Outre les oxydes de fer, les verres préconisés par ces demandes de brevet contiennent de l'oxyde cérique et de l'oxyde de titane. Si ces oxydes permettent d'augmenter l'absorption des radiations ultraviolettes, leur emploi ne présente pas que des avantages.

Ainsi, l'oxyde de cérium est un constituant assez onéreux dont l'utilisation majore le prix du verre obtenu ; il a également une influence sur l'équilibre des oxydes ferreux et ferrique au détriment de l'oxyde ferreux. L'oxyde de titane pour sa part présente l'inconvénient de réduire la transmission lumineuse dans le visible.

La présente invention a pour objet un verre susceptible d'être nappé à la surface d'un bain de métal fondu, dont les caractéristiques de transmission sont principalement régies par la présence d'oxydes de fer et qui présente, par rapport à des verres connus comparables, une capacité d'absorption des radiations infrarouges et ultraviolettes au moins équivalente à celle desdits verres mais sous une plus faible épaisseur.

Le but de l'invention est atteint grâce à une composition de verre silico-sodocalcique qui comprend, exprimés en pourcentages pondéraux, de 0,75 à 1,4% de fer total exprimé sous la forme de Fe₂O₃, de 0,25 à 0,32% de fer ferreux sous la forme de FeO et qui présente, sous une épaisseur comprise entre environ 3 et 3,3 millimètres, un facteur de transmission lumineuse globale sous illuminant A (TL_{A}) au moins égal à 70%, un facteur de transmission énergétique globale (T_{E}) inférieur à environ 46% et un facteur de transmission de radiations ultraviolettes inférieur à environ 25%. Les valeurs de transmission lumineuse et énergétique ont été déterminées selon la méthode Parry Moon Mass 2 ; la transmission dans l'ultraviolet a été déterminée selon la méthode définie par la norme ISO 9050.

Les verres selon l'invention sont élaborés à partir de matières premières courantes dans des fours classiques utilisés dans le cadre de la technique du verre flotté. La fusion et l'affinage des verres selon l'invention a lieu dans des fours à flammes munis, éventuellement, d'électrodes assurant le chauffage du verre dans la masse par passage d'un courant électrique entre lesdites électrodes. Le degré d'oxydo-réduction des verres selon l'invention est contrôlé à l'aide d'agents oxydants, tel que le sulfate de sodium et d'agents réducteurs tel que du coke. La quantité de sulfate de sodium, introduite dans le mélange vitrifiable, considération prise des caractéristiques du four dans lequel ce mélange est fondu, est telle que la teneur en SO₃ dans le verre est généralement comprise entre 0,10 et 0,35%.

La teneur en agents réducteurs associée au sulfate, considération prise également des caractéristiques du four d'élaboration du verre, est calculée de manière à ce que le degré d'oxydo-réduction dudit verre soit maintenu entre des limites précises. Ces limites sont définies par les valeurs extrêmes du rapport entre la quantité de fer ferreux exprimé sous la forme FeO et la quantité de fer total exprimé sous la forme Fe₂O₃. Selon l'invention, ce rapport FeO/Fe₂O₃ varie de 22 à 34%; il est de préférence compris entre 25 et 30%.

Les verres selon l'invention sont des verres silico-sodo-calciques qui comprennent les constituants ci-après dans les teneurs définies par les limites suivantes exprimées en pourcentages pondéraux :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 0,75 à 1,4 % |
| FeO | 0,25 à 0,32 % |
| SO₃ | 0,10 à 0,35 % |

Les verres selon l'invention peuvent contenir en outre d'autres constituants considérés comme des impuretés et introduits par le biais des matières premières vitrifiables employées et/ou par le calcin de verres introduit dans le mélange vitrifiable et contenant en faible quantité des agents colorants autres que les oxydes de fer. Ces impuretés représentent moins de 0,1% en poids du verre ; ce sont par exemple du titane, du cobalt, du nickel, du chrome, du sélénium ou du manganèse.

Les verres selon l'invention contiennent, de préférence, de 0,85 à 1,3% de fer total exprimé sous la forme Fe₂O₃.

Dans les verres selon l'invention, la teneur en fer total et le contrôle des teneurs respectives en oxydes ferreux et ferrique permettent d'obtenir une absorption notable des radiations infrarouges et ultraviolettes sous des épaisseurs relativement faibles. Cela est particulièrement avantageux lorsque le verre est destiné à la réalisation de vitrages de faible épaisseur

Outre les caractéristiques de transmission mentionnées précédemment, les verres selon l'invention présentent une teinte tirant sur le bleu-vert. Leur longueur d'onde dominante sous illuminant C c'est généralement comprise entre 490 et 505 nanomètres.

Le verre donné à titre d'exemple ci-après permettra d'apprécier les avantages des verres selon l'invention.

Le mélange vitrifiable utilisé pour obtenir 100 grammes de ce verre est le suivant :

| | |
|---|---|
| sable | 63 g |
| calcaire | 5,7 g |
| dolomie | 21,4 g |
| néphéline | 0,90 g |
| carbonate de sodium | 27,3 g |
| sulfate de sodium | 0,75 g |
| potée | 0,9 g |
| coke | 0,035 g |

L'analyse du verre obtenue exprimée en pourcentages pondéraux est la suivante :

| | |
|---|---|
| SiO₂ | 70,57 % |
| Al₂O₃ | 0,62 % |
| CaO | 9,50 % |
| MgO | 3,90 % |
| Na₂O | 13,90 % |
| K₂O | 0,09 % |
| SO₃ | 0,18 % |
| Fe₂O₃ (fer total) | 0,95 % |
| FeO | 0,285 % |
| FeO/fer total | 0,30 % |

Les caractéristiques de transmission de ce verre mesurées comme précisé précédemment sous une épaisseur de 3,15 millimètres sont les suivantes :

| | |
|---|---|
| TL_{A} | 71 % |
| T_{E} | 43,5% |
| T_{UV} | 18 % |

ce verre présente une longueur d'onde dominante, sous illuminant C, de 499 nanomètres.

Les verres selon l'invention peuvent être transformés en ruban continu en employant la technique du verre flotté. Les feuilles de verre obtenues par découpe de ce ruban présentent des épaisseurs variant entre 1 et 5 millimètres. Ces feuilles de verre peuvent être utilisées seules ou associées pour réaliser des vitrages destinés notamment à être montés sur des véhicules automobiles.

Pour réaliser des pare-brise ou des vitrages latéraux on utilise une seule feuille de verre ou deux feuilles de verre séparées par une feuille intercalaire d'une matière organique. L'épaisseur totale du verre est le plus souvent comprise entre 3 et 4 millimètres. Sous ces épaisseurs les verres selon l'invention assurent une bonne absorption du rayonnement ultraviolet et un bon confort thermique.

A l'instar d'autres vitrages, les vitrages obtenus à partir des verres selon l'invention peuvent être soumis au préalable à des traitement superficiels ou être associés, par exemple, à un revêtement organique tel qu'un film à base de polyuréthanes à propriétés antilacérantes ou à un film assurant l'étanchéité en cas de bris ; il peut être revêtu localement d'une couche telle qu'une couche d'émail.

Les vitrages selon l'invention peuvent être revêtus d'au moins une couche d'oxyde métallique obtenue par dépôt chimique à haute température selon les techniques de pyrolyse ou de dépôt chimique en phase vapeur (CVD) ou par dépôt sous vide.

## Revendications

1. Composition de verre silico-sodo calcique destinée à la réalisation de vitrage, qui comprend, exprimée en pourcentages pondéraux de 0,75 à 1,4 % de fer total exprimé sous la forme de Fe₂O₃, de 0,25 à 0,32% de fer ferreux sous la forme de FeO et qui présente, sous une épaisseur comprise entre environ 3 et 3,3 millimètres, un facteur de transmission lumineuse globale sous illuminant A (TL_{A}) au moins égal à 70%, un facteur de transmission énergétique globale (T_{E}) inférieur à environ 46% et un facteur de transmission de radiations ultraviolettes inférieur à environ 25%.

2. Composition de verre selon la revendication 1, **caractérisée en ce que** sa teneur en fer ferreux sous la forme FeO représente entre 22 et 34% de la teneur en fer total exprimé sous la forme de fer total exprimé sous la forme de Fe₂O₃.

3. Composition de verre selon l'une des revendications précédentes, **caractérisée en ce qu'**elle comprend les constituants ci-après dans les teneurs définies par les limites suivantes exprimées en pourcentages pondéraux :
| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 0,75 à 1,4 % |
| FeO | 0,25 à 0,32 % |
| SO₃ | 0,10 à 0,35 % |
et éventuellement, moins de 0,1% d'impuretés.

4. Composition de verre selon la revendication 3, **caractérisée en ce que** sa teneur en fer ferreux sous la forme de FeO représente entre 25 et 30% de la teneur en fer total exprimée sous la forme de Fe₂O₃.

5. Composition de verre selon l'une des revendications 3 et 4, **caractérisée en ce que** sa teneur en fer total, exprimée sous la forme Fe₂O₃ est comprise entre 0,85 et 1,3%.

6. Vitrage **caractérisé en ce qu'**il comprend au moins une feuille de verre dont la composition chimique est définie par l'une quelconque des revendications précédentes.

## Patentansprüche

1. Kalk-Natron-Silicat-Glaszusammensetzung, welche zur Herstellung einer Verglasung bestimmt ist und in Gewichtsprozenten ausgedrückt 0,75 bis 1,4 % als Fe₂O₃ ausgedrücktes Gesamteisen und 0,25 bis 0,32 % Eisen(II)-oxid in Form von FeO enthält und bei einer Dicke von etwa 3 bis 3,3 Millimetern einen globalen Lichttransmissionsgrad (TL_{A}) für Normlichtart A von mindestens 70 %, einen Gesamtenergiedurchlaßgrad (T_{E}) von unter etwa 46 % und einen UV-Transmissionsgrad von unter etwa 25 % aufweist.

2. Glaszusammensetzung nach Anspruch 1, **dadurch gekennzeichnet, daß** ihr Gehalt an Eisen(II)-oxid in Form von FeO zwischen 22 und 34 % des Gehalts an Gesamteisen, das als Gesamteisen in Form von Fe₂O₃ ausgedrückt ist, ausmacht.

3. Glaszusammensetzung nach einem der vorhergehenden Ansprüche, **dadurch gekennzeichnet, daß** sie folgende Bestandteile mit den Anteilen enthält, die durch nachstehende in Gewichtsprozenten ausgedrückte Grenzen:
| | |
|---|---|
| SiO₂ | 64 bis 75 % |
| Al₂O₃ | 0 bis 5 % |
| B₂O₃ | 0 bis 5 % |
| CaO | 2 bis 15 % |
| MgO | 0 bis 5 % |
| Na₂O | 9 bis 18 % |
| K₂O | 0 bis 5 % |
| Fe₂O₃ (in dieser Form ausgedrücktes Gesamteisen | 0,75 bis 1,4 % |
| FeO | 0,25 bis 0,32 % |
| SO₃ | 0,10 bis 0,35 % |
und gegebenenfalls weniger als 0,1 % Verunreinigungen definiert sind.

4. Glaszusammensetzung nach Anspruch 3, **dadurch gekennzeichnet, daß** ihr Gehalt an Eisen(II)-oxid in Form von FeO zwischen 25 und 30 % des Gehalts an in Form von Fe₂O₃ ausgedrücktem Gesamteisen ausmacht.

5. Glaszusammensetzung nach Anspruch 3 oder 4, **dadurch gekennzeichnet, daß** ihr Gehalt an in Form von Fe₂O₃ ausgedrücktem Gesamteisen 0,85 bis 1,3 % beträgt.

6. Verglasung, **dadurch gekennzeichnet, daß** sie mindestens eine Glasscheibe umfaßt, deren chemische Zusammensetzung durch einen der vorhergehenden Ansprüche definiert ist.

## Claims

1. Soda-lime-silica glass composition for producing a glazing, which comprises, expressed in percentages by weight, 0.75 to 1.4% total iron expressed in the form Fe₂O₃, 0.25 to 0.32% ferrous iron in the form FeO and having, for a thickness between approximately 3 and 3.3 millimetres, a total light transmission factor under illuminant A (TL_{A}) of at least 70%, a total energy transmission factor (T_{E}) below approximately 46% and an ultraviolet radiation transmission factor below approximately 25%.

2. Glass composition according to claim 1, characterized in that its content of ferrous iron in the form FeO represents between 22 and 34% of the total iron content expressed in the form Fe₂O₃.

3. Glass composition according to one of the preceding claims, characterized in that it comprises the following constituents in content levels defined by the following limits, expressed as percentages by weight:
| | |
|---|---|
| SiO₂ | 64 to 75% |
| Al₂O₃ | 0 to 5% |
| B₂O₃ | 0 to 5% |
| CaO | 2 to 15% |
| MgO | 0 to 5% |
| Na₂O | 9 to 18% |
| K₂O | 0 to 5% |
| Fe₂O₃ (total iron expressed in this form) | 0.75 to 1.4% |
| FeO | 0.25 to 0.32% |
| SO₃ | 0.10 to 0.35% |
and optionally, less than 0.1% impurities.

4. Glass composition according to claim 3, characterized in that its content of ferrous iron in the form FeO represents between 25 and 30% of the total iron content expressed in the form Fe₂O₃.

5. Glass composition according to one of the claims 3 and 4, characterized in that its total iron content, expressed in the form Fe₂O₃, is between 0.85 and 1.3%.

6. Glazing, characterized in that it comprises at least one glass sheet, whose chemical composition is defined by any one of the preceding claims.
